Europäisches Patentamt

European Patent Office

Office européen des brevets

(19)

(11) Veröffentlichungsnummer: **0 000 188**

**A1**

(12) # EUROPÄISCHE PATENTANMELDUNG

(21) Anmeldenummer: 78100227.4

(22) Anmeldetag: 23.06.78

(51) Int. Cl.²: **B 60 K 15/04**, G 01 F 15/08

(30) Priorität: 24.06.77 DE 2728428

(43) Veröffentlichungstag der Anmeldung:
10.01.79 Patentblatt 79/1

(84) Benannte Vertragsstaaten:
BE CH FR GB LU NL SE

(71) Anmelder: Schütz, Siegbert,
Kapellenweg,
D-7483 Inzigkofen (DE)

(84) Benannte Vertragsstaaten:
BE CH FR GB LU NL SE

(71) Anmelder: Seifried, Kuno,
Veilchenstrasse 48,
D-7537 Remchingen (DE)

(84) Benannte Vertragsstaaten:
BE CH FR GB LU NL SE

(71) Anmelder: Traber, Hans,
Föhrenweg 13,
D-7969 Ostrach (DE)

(84) Benannte Vertragsstaaten:
BE CH FR GB LU NL SE

(72) Erfinder: Schütz, Siegbert,
Kapellenweg,
D-7483 Inzigkofen (DE)

(72) Erfinder: Seifried, Kuno,
Veilchenstrasse 48,
D-7537 Remchingen (DE)

(72) Erfinder: Traber, Hans,
Föhrenweg 13,
D-7969 Ostrach (DE)

(74) Vertreter: Eisele, Eberhard, Dipl.-Ing.,
Goetheplatz 7,
D-7980 Ravensburg (DE)

(54) Vorratstank für Flössigkeiten.

(57) Vorratstank für Flüssigkeiten mit einem Einlaufstutzen und einer mit dem Tank fest verbundenen Flüssigkeits-Mengenmeßvorrichtung, die eine Überwachung der eingebrachten Füllmenge gestattet, beispielsweise Kraftstofftank für Lastkraftwagen. Zur Verhinderung betrügerischer Manipulation an der Mengenmeßvorrichtung ist vorgesehen, daß der Einlaufstutzen (3) eine Abdichtmanschette, insbesondere einen aufblasbaren Ringschlauch (12), zum dichten Anschluß eines Füllrohres (13) aufweist und die Mengenme vorrichtung mit einem Gasme verhüter ausgestattet ist. Der Strömungswiderstand der Mengeme vorrichtung ist verhältnismä ig hoch oder kann durch ein vorgeschaltetes federbelastetes Sperrventil (8, 9) beliebig erhöht werden.

EP 0 000 188 A1

Croydon Printing Company Ltd.

- 1 -

Siegbert Schütz
Kapellenweg
D-7483 Inzigkofen

Kuno Seifried
Veilchenstr. 48
D-7537 Remchingen

Hans Traber
Föhrenweg 13
7969 Ostrach

## Vorratstank für Flüssigkeiten

Die Erfindung betrifft einen Vorratstank für Flüssigkeiten mit einem Einlaufstutzen und einer Flüssigkeits-Mengenmeßvorrichtung, die mit dem Tank fest verbunden und plombiert ist und eine Überwachung der durch den Einlaufstutzen eingebrachten Füllmenge gestattet.

- 2 -

Aus der deutschen Offenlegungsschrift 14 80 046 ist ein Kraftstofftank für Fahrzeuge bekannt, bei dem eine mit dem Tank fest verbundene Fülleitung als Meßstrecke ausgebildet ist, um Täuschungen über die tatsächlich getankten Mengen zu unterbinden. Zwar werden an den Tankstellen die abgegebenen Mengen gemessen. Fälschungen der darüber ausgestellten Belege können jedoch nur nachgewiesen werden, wenn auch die aufgenommene Menge gemessen wird.

Bei dem bekannten Kraftstofftank enthält die Meßstrecke unter anderem einen Gasabscheider, der es möglich machen soll, die Füllflüssigkeit wie üblich mit natürlichem Gefälle in freiem Strahl in einen verhältnismäßig weiten Stutzen einlaufen zu lassen. Ohne einen solchen Gasabscheider würden nämlich die gasigen Bestandteile des sich natürlicherweise bildenden Flüssigkeits-Gas-Luft-Gemisches die Flüssigkeitsmengenmessung verfälschen. Solche Gasabscheider sind aber verhältnismäßig voluminös, teuer und vor allem hinsichtlich ihrer Wirksamkeit von außen beeinflußbar. Zum anderen kann die Meßvorrichtung dieses bekannten Kraftstofftanks dadurch überlistet werden, daß man Luft unter Druck in den Einfüllstutzen einbläst oder einpumpt. Diese setzt das Meßwerk in Bewegung und täuscht die Aufnahme von Kraftstoff vor. Die Luft würde anschließend durch die Entlüftungsleitung wieder entweichen können.

Der Erfindung liegt daher die Aufgabe zugrunde, einen Vorratstank für Flüssigkeiten mit einer Einfüllkontrollvorrichtung vorzuschlagen, die einfacher ausgebildet, ebenfalls einfach zu handhaben und sowohl unbeeinflußbar als auch unüberlistbar ist.

Diese Aufgabe wird ausgehend von einem Vorratstank der einleitend näher bezeichneten Art erfindungsgemäß dadurch gelöst, daß an dem Einlaufstutzen eine vorzugsweise zusammenspannbare Abdichtmanschette zum dichten Anschluß eines Füllrohres vorgesehen und daß die Mengenmeßvorrichtung mit einem Gasmeßverhüter ausgestattet ist. Der dichte Anschluß des Füllrohres, also beispielsweise der bei Tankstellen üblicherweise vorhandenen Zapfpistole, läßt einen Luftzutritt und eine Gasbildung vor dem Durchlauf durch die dem Tank zugeordnete Meßvorrichtung gar nicht erst zu, so daß ein Gasabscheider entbehrlich wird. Eine Verfälschung des Meßergebnisses durch absichtliche Luftzuführung, etwa dadurch, daß die Abdichtmanschette absichtlich nicht dicht angelegt wird, kann einfach dadurch verhindert werden, daß eine Mengenmeßvorrichtung mit einem erhöhten Durchlaufwiderstand gewählt wird, so daß die einzufüllende Flüssigkeit an der Abdichtmanschette austritt, wenn diese nicht dicht geschlossen ist. Eine echte Falschmessung durch Einpumpen reiner Luft wird dagegen durch die Anordnung eines an sich bekannten Gasmeßverhüters vor oder in dem Meßwerk unterbunden. Dieser spricht auf das spezifische Gewicht des Durchlaufmediums an und sperrt das Meßwerk bei Gas.

Durchlaufmengenzähler für Flüssigkeiten mit erhöhtem Durchlaufwiderstand geben technisch keine Probleme auf. Sie sind vielmehr genauer und billiger, da die konstruktiven Bestrebungen im Meßgerätebau gewöhnlich dahin gehen, den Durchlaufwiderstand bei Aufrechterhaltung der Meßgenauigkeit zu verringern. Es eignen sich also grundsätzlich Flügelradzähler, Ovalradzähler, Ringkolbenzähler und dgl.

Sofern der Strömungswiderstand des Meßwerks selbst für den erwähnten Zweck zu gering oder nicht genau genug definiert ist, wird weiter vorgeschlagen, in dem Einlaufstutzen oder in der nachgeschalteten Fülleitung ein von außen nicht zugängliches federbelastetes Sperrventil anzuordnen, das einer unter Druck einströmenden Flüssigkeit öffnend nachgibt. Hier käme beispielsweise eine federbelastete Klappe in Betracht, wobei der Öffnungsdruck mit Hilfe einer Justiervorrichtung einstellbar sein könnte. Bei Kraftstofftanks, die aus den üblichen Zapfsäulen an Tankstellen gefüllt werden, könnte der Öffnungsdruck so hoch eingestellt werden, daß er von den üblichen Förderpumpen gerade noch überwunden wird.

Die Abdichtmanschette kann mit einer zangenartigen Klemmvorrichtung angelegt werden. In Weiterbildung der Erfindung wird vorgeschlagen, daß sie aus einem aufblasbaren und dadurch seinen Innendurchmesser verringernden Ringschlauch besteht. Zum Aufblasen desselben könnte an dem Tank eine kleine Luftpumpe angeordnet sein. Da die Füllenden, d.h. die Füllrohre von Zapfpistolen an Tankstellen üblicherweise an ihrer Außenfläche profiliert, d.h. mit Längsrinnen oder -rillen versehen oder verbeult sind, empfiehlt es sich, die Abdichtmanschette innen mit einem weichen Polster oder einer anschmiegfähigen Dichtlippe auszustatten.

Die Erfindung ermöglicht es somit, den an Zapfsäulen zur Verfügung gestellten gasfreien Flüssigkeitsstrom ohne Luftzutritt einer zweiten Volumenmessung zuzuführen und somit die einzufüllende Menge unter Verwendung einer relativ einfachen Meßvorrichtung mit ausreichender Genauigkeit zu messen. Dabei wird die Tatsache, daß die Flüssigkeit an Tankstellen mit einem gewissen Fülldruck zur Verfügung gestellt wird, dazu ausgenutzt, die mit der Tankfüllung befaßten Personen zum dichten Anschluß der Fülleitung zu zwingen. Die Erfindung ist jedoch nicht auf Kraftstofftanks beschränkt. Sie läßt sich vielmehr bei allen anderen Flüssigkeitstanks einsetzen, wenn ein Bedürfnis besteht, die Einfüllmenge zu kontrollieren, sei es, um absichtliche Täuschungsversuche auszuschließen oder nur die abgabeseitigen Meßgeräte zu kontrollieren.

Ein Ausführungsbeispiel der Erfindung wird nachfolgend anhand einer schematischen Schnittzeichnung eines Kraftstofftanks näher erläutert.

Der nur teilweise dargestellte Tank hat eine Wand 1 und eine Decke 2. An einen schräg eingesetzten Einlaufstutzen 3 schließt sich ein waagerechter Abschnitt 4 und ein schräger Abschnitt 5 einer Fülleitung an. In den waagerechten Abschnitt ist ein Volumenzähler 6 für die eingefüllte Flüssigkeit eingesetzt. Dieser enthält auch einen an sich bekannten Gasmeßverhüter, der im übrigen auch vorgeschaltet sein könnte. In einem durch die Decke 2 nach oben stehenden Ansatz des Volumenzählers ist eine von außen ablesbare Anzeigevorrichtung 7 enthalten. In Strömungsrichtung vor dem Volumenzähler befindet sich eine Klappe 8, welche von einer Feder 9 beaufschlagt ist und die Fülleitung erst von einem bestimmten Druck ab freigibt. Vor der Klappe befindet sich im Einfüllstutzen 3 ein plombierter Gittereinsatz 10, welcher jeden unbefugten Zugang zu der Klappe 8 oder dem Volumenzähler 6 unmöglich macht. Die verwendeten Plomben sind nicht eigens angedeutet. Selbstverständlich ist auch die nicht gezeigte Verschraubung der Anzeigevorrichtung 7 plombiert. Außerdem könnte die Anzeigevorrichtung durch eine plombierte oder durch ein Schloß sperrbare Klappe gegen Einsichtnahme geschützt sein.

Auf die Öffnung des Einfüllstutzens 3 ist eine Abdichtvorrichtung unverlierbar aufgesetzt. Sie besteht aus einem Ring 11 und einer Abdichtmanschette in Gestalt eines Ringschlauches 12 aus einem elastomeren Werkstoff, der mittels einer nicht dargestellten kleinen Pumpe und entsprechender Ventileinrichtungen aufblasbar ist. Die anschmiegsam gepolsterte Innenfläche des Ringschlauches legt sich dicht um das Auslaufrohr 13 einer Zapfpistole 14. Schließlich ist noch ein Teil der üblichen Entlüftungsleitung 15 angedeutet, die an der Außenseite des Einlaufstutzens 3 hochgeführt sein kann.

Zum Tanken wird das Auslaufrohr 13 der Zapfpistole 14 in den Einlaufstutzen 3 eingesteckt und durch Aufblasen des Ringschlauches 12 eine dichte Anschlußverbindung geschaffen. Die im Einlaufstutzen 3 und im Auslaufrohr 13 enthaltene Luft wird mit dem Öffnen der Zapfpistole 14 durch den Volumenzähler 6 gedrängt, was dieser jedoch infolge des Gasmeßverhüters nicht zählt. Es ergibt sich somit eine sehr genaue und gegen Täuschungsversuche jeder Art geschützte Einlaufmengenkontrolle.

- 1 -

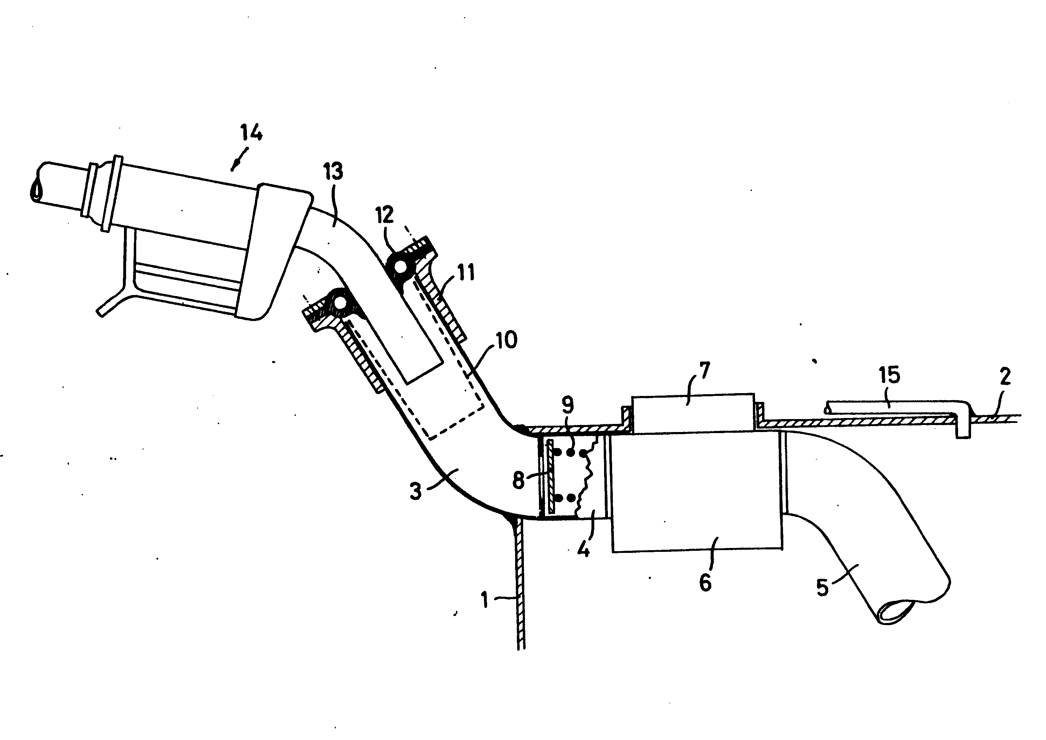

Patentansprüche:

1. Vorratstank für Flüssigkeiten mit einem Einlaufstutzen und einer Flüssigkeits-Mengenmeßvorrichtung, die mit dem Tank fest verbunden und plombiert ist und eine Überwachung der durch den Einlaufstutzen eingebrachten Füllmenge gestattet, dadurch gekennzeichnet, daß an dem Einlaufstutzen (3) eine Abdichtmanschette (12) zum dichten Anschluß eines Füllrohres (13) vorgesehen und daß die Mengenmeßvorrichtung mit einem Gasmeßverhüter ausgestattet ist.

2. Vorratstank nach Anspruch 1, dadurch gekennzeichnet, daß die Abdichtmanschette einen aufblasbaren und dadurch seinen Innnendurchmesser verringernden Ringschlauch (12) enthält.

3. Vorratstank nach Anspruch 2, dadurch gekennzeichnet, daß in dem Einlaufstutzen (3) oder in der nachgeschalteten Fülleitung (4, 5) ein von außen nicht zugängliches federbelastetes Sperrventil (8, 9) angeordnet ist, das einer unter Druck einströmenden Flüssigkeit öffnend nachgibt.

Europäisches
Patentamt

EUROPÄISCHER RECHERCHENBERICHT

Nummer der Anmeldung

0000188

EP 78 10 0227

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | <u>DE - A - 1 480 046</u> (SIEMENS)<br>* Seite 2, Zeile 3-9 * | 1 |
| A | <u>DE - A - 2 336 214</u> (VOLKSWAGENWERK)<br>* Seite 6, Zeile 1-6; Abbildung 2 * | 1 |
| A | <u>US - A - 3 805 857</u> (JOHNSON)<br>* Figur 2; Spalte 3, Zeile 26-29, 44-46 * | 1 |
| A | <u>FR - A - 2 203 773</u> (TEXACO)<br>* Seite 4, Zeile 25-37; Figuren 2,3 * | 1 |
| A | <u>FR - A - 2 215 560</u> (EDELEANU)<br>* Figur 1; Seite 2, Zeile 34 bis Seite 3, Zeile 5 * | 1 |

**KLASSIFIKATION DER ANMELDUNG (Int.Cl.³)**

B 60 K 15/04
G 01 F 15/08

**RECHERCHIERTE SACHGEBIETE (Int. Cl.³)**

B 60 K 15/00
G 01 F 15/00
B 67 D 5/00
B 65 D 87/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführte Dokument

L: aus andern Gründen angeführtes Dokument

&: Mitglied der gleichen Patentfamilie, übereinstimmende Dokument

Der vorliegende Recherchenbericht wurde für alle Patentansprüche erstellt.

| Recherchenort | Abschlußdatum der Recherche | Prüfer |
|---|---|---|
| Den Haag | 21-09-1978 | AYITER |